Europäisches Patentamt

European Patent Office

Office européen des brevets

(11) Veröffentlichungsnummer: **0 218 907**
A2

# (12) EUROPÄISCHE PATENTANMELDUNG

(21) Anmeldenummer: 86112372.7

(22) Anmeldetag: 06.09.86

(51) Int. Cl.⁴: **B23D 33/04** , B21D 43/28

(30) Priorität: 14.09.85 DE 3532914

(43) Veröffentlichungstag der Anmeldung:
22.04.87 Patentblatt 87/17

(84) Benannte Vertragsstaaten:
DE FR GB IT

(71) Anmelder: Kunz, Dieter, Dipl.-Ing.
Oberhöchstädter Strasse 12a
D-6242 Kronberg/Taunus(DE)

(72) Erfinder: Kunz, Dieter, Dipl.-Ing.
Oberhöchstädter Strasse 12a
D-6242 Kronberg/Taunus(DE)

(74) Vertreter: Gudel, Diether, Dr. et al
Patentanwälte Dr. V. Schmied-Kowarzik
Dipl.-Ing. G. Dannenberg Dr. P. Weinhold Dr.
D. Gudel Dipl.-Ing. S. Schubert Dr. P. Barz
Grosse Eschenheimer Strasse 39
D-6000 Frankfurt am Main 1(DE)

(54) Kreisschere.

(57) Beschrieben wird eine Kreisschere zum Ausschneiden einer Ronde aus einer Platine, wobei die Schere und eine Spannvorrichtung für die Platine an derselben Seite der Kreisschere vorgesehen sind. Die Platinen werden von der Stirnseite der Kreisschere zugeführt. In der Kreisschere werden die Ronden und die Abfallstücke voneinander getrennt und seitlich nach rechts bzw. links abtransportiert. Die Vorteile der Erfindung liegen insbesondere in einer geringen Taktzeit mit Möglichkeit der Vollautomatisierung. Bei Beschickung von Hand erfolgt dies in ergonomisch vorteilhafter Weise.

Fig. 1

EP 0 218 907 A2

Die Erfindung betrifft eine Kreisschere zum Ausschneiden einer Ronde aus einer Platine mit einem Rahmen, an dem eine in einer Seitenansicht C-förmig profilierte, feststehende Spannvorrichtung zum Einspannen der Platine vorgesehen ist, ferner eine Schere mit einem auf Drehung angetriebenen Schermesserpaar und ein horizontaler Arbeitstisch zur Auflage der Platine.

Bei Kreisscheren war es schon immer problematisch, das aus der Platine herausgetrennte Abfallstück so von der Ronde zu trennen, daß keine Verletzungsgefahr bestand und trotzdem kurze Taktzeiten möglich waren. So ist eine Kreisschere mit den eingangs genannten Merkmalen, von der die Erfindung ausgeht, bekannt, bei der eine Bedienungsperson die Platine von Hand in die Spannvorrichtung einlegt, die dann dort festgespannt wird. Anschließend schneidet die Schere aus der Platine die Ronde aus, wobei dann ein ringförmiges Abfallstück zurückbleibt. Die Platine muß jetzt von Hand vom Abfallstück getrennt und entnommen werden. Erst dann kann das zurückbleibende Abfallstück ebenfalls entnommen und beiseite gelegt werden. Diese bekannte Kreisschere zeichnet sich zwar durch eine einfache Konstruktion und einen genauen Schnitt aus, jedoch sind die beiden Teile, nämlich die Ronde und das Abfallstück, nur schwer zu manipulieren, weil sie von der Bedienungsperson in derselben Richtung aus der Maschine nach ihrer Trennung entnommen werden müssen, in der vorher und nachher die Platine in die Kreisschere eingelegt wird. Die Bedienungsperson kann also erst nach Vollendung eines vollständigen Herstellungszyklus einschl. der Trennung und getrennten Ablage der Ronde und des Abfallstücks eine neue Platine in die Kreisschere einlegen. Besonders nachteilig ist hierbei auch die Unfallgefahr, auch dadurch bedingt, daß die Bedienungsperson gegebenenfalls in ein drehendes Teil eingreifen muß. Diese bekannte Kreisschere läßt sich nicht automatisieren.

Eine andere bekannte Kreisschere verkürzt die von der Bedienungsperson hierbei zurückzulegenden Wege, indem die Spannvorrichtung schwerkbar gemacht wird, so daß sie der Bedienungsperson entgegengeschwenkt wird und dann in ihrer Arbeitslage eingeschwenkt wird. Dadurch wird das Einlegen und die Entnahme der Platine bzw. der Ronde vereinfacht. Der hier verwendete Außenschnitt vermeidet auch das möglicherweise nachteilige Einstichschneiden. Die eingangs hervorgehobenen Nachteile der gattungsbildenden Maschine bleiben hier grundsätzlich aber ebenfalls aufrecht erhalten, weil alle Bedienungswege von und zu der Maschine von einer Seite der Maschine her vorgenommen werden. Hinzu kommt eine erhöhte Verletzungsgefahr, die dadurch bedingt ist, daß das Abfallstück nicht ringförmig ist, sondern als gewundenes Band entsteht, was natürlich die Verletzungsgefahr fühlbar erhöht. Dies beruht auf dem dort verwendeten Außenschnittverfahren.

Eine andere bekannte Kreisschere verwendet einen geneigten Arbeitstisch, über den dann das ringförmige Abfallstück an die Rückseite der Kreisschere abgegeben werden kann, während die Ronde von Hand nach vorne entnommen wird. Dies bringt zwar den Vorteil mit sich, daß das Verletzungsgefahren bergende Abfallstück von der Bedienungsperson weg transportiert wird, und zwar lediglich aufgrund der Schwerkraft, doch haftet dieser bekannten Kreisschere insbesondere der Nachteil einer schlechten Ergonomik an, weil nämlich die Bedienungsperson die recht schwere Platine zum Einlegen in die Kreisschere anheben und entsprechend der Neigung des Arbeitstisches kippen muß. Auch ist hier die Trennung der Ronde vom Abfallstück ebenfalls sehr ungünstig, verbunden mit einer Unfallgefahr, weil man gegebenenfalls während des Schnitts eingreifen muß, um nämlich die Ronde festzuhalten. Auch hier muß die Ronde nach wie vor manipuliert werden. Diese bekannte Kreisschere ist außerdem schwierig zu automatisieren, weil die Platine in eine Schräglage gebracht werden muß, was nur mit komplizierten Automaten möglich ist.

Diese bekannte Kreisschere wurde noch derart weiter entwickelt, daß nach dem Trennvorgang in der Kreisschere die Ronde angehoben wird, wodurch dann die Ronde vom ringförmigen Abfallstück getrennt wird. Beide Teile rutschen dann nacheinander die geneigte Arbeitsfläche herunter, an deren Ende eine Weiche vorgesehen ist, die die Ronden von den Abfallstücken trennt. Hier wird zwar die Bedienungsperson entlastet, dieser Vorteil wird aber mit einem hohen technischen Aufwand erkauft. Beispielsweise müssen gesonderte Transportmittel zum Abfördern der Abfallstücke vorgesehen werden, weil diese unterhalb der Weiche bzw. des Arbeitstisches abgelegt werden.

Die Erfindung vermeidet diese Nachteile. Ihr liegt die Aufgabe zugrunde, bei Beibehaltung der Vorteile der eingangs genannten bekannten Kreisschere diese so auszugestalten, daß eine fühlbar verkürzte Taktzeit erreicht wird, verbunden mit der Möglichkeit der Automatisierung der Kreisschere. Insbesondere soll auch die gute Ergonomik beibehalten bleiben, die insbesondere durch den horizontalen Arbeitstisch bewirkt wird.

Zur Lösung dieser Aufgabe ist die erfindungsgemäße Kreisschere dadurch gekennzeichnet, daß die Schere und die Spannvorrichtung an derselben Seite der Kreisschere vorgesehen sind, daß eine Hubvorrichtung vorgesehen ist, die die Ronde und das Abfallstück der Platine auf verschiedene Ebenen bringt und daß sich seitlich erstreckende Vorrichtungen zum Abtransport der Ronde bzw. des Abfallstücks nach rechts bzw. links seitlich neben der Spannvorrichtung vorgesehen sind.

Dadurch, daß man die Schere und die Spannvorrichtung jetzt baulich gewissermaßen miteinander vereinigt, welche Bauteile beim gattungsbildenden Stand der Technik um 180° voneinander getrennt aufgestellt waren, schafft man Platz an der einen Seite. Diesen jetzt geschaffenen Platz kann man dadurch ausnutzen, daß man die Ronde und das ringförmige Abfallstück in der Kreisschiene voneinander trennt und dann in verschiedenen Richtungen, d.h. nach rechts bzw.links, abtransportiert. Die Stirnseite der Kreisschiene bleibt also für das Beschicken der Kreisschere mit den Platinen frei und diese Stirnseite wird auch nur für diesen Vorgang benutzt, nicht etwa für den Abtransport der Ronde und des Abfallstücks, wie beim gattungsbildenden Stand der Technik.

Die Erfindung geht daher weiterhin aus von einem Arbeitsverfahren der eingangs erläuterten, bekannten Kreisschere, wobei zum Ausschneiden einer Ronde aus einer Platine man die Platine einer Bearbeitungsstation der Kreisschere mit horizontalem Arbeitstisch zuführt, in der eine Schere aus der Platine die Ronde ausschneidet und dabei ein ringförmiges Abfallstück herstellt, worauf man die Ronde und das Abfallstück voneinander trennt und getrennt abtransportiert.

Zur Lösung der erwähnten Aufgabenstellung ist dieses Arbeitsverfahren erfindungsgemäß dadurch gekennzeichnet, daß man die Ronde und das Abfallstück in der Bearbeitungsstation durch eine lotrechte Bewegung wenigstens eines dieser Teile voneinander trennt und anschließend diese beiden Teile seitlich in unterschiedlichen Richtungen abtransportiert.

Bevorzugt wird es, wenn die Hubvorrichtung an der Spannvorrichtung ausgebildet ist, weil man dann nur die Zylinder der Spannvorrichtung um ein entsprechendes Maß anheben bzw. absenken muß. Dies bietet eine konstruktive Vereinfachung.

Weiterhin wird es bevorzugt, wenn die Vorrichtung zum Abtransport der Ronde als hin und her bewegliche Zange, Saugplatte oder Magnetplatte ausgebildet ist oder als angetriebener Rollengang.

Nachdem das Abfallstück ringförmig anfällt, ist es ebenfalls konstruktiv besonders einfach, wenn die Vorrichtung zum Abtransport des Abfallstücks als in Transportrichtung hin und her beweglicher Stift ausgebildet ist. Dieser legt sich an die Innenkante des Abfallstücks an und transportiert dieses dann ab. Der Stift ist heb-und senkbar, um in seine Arbeitsstellung bzw. wieder aus ihr herausgebracht werden zu können.

Die Erfindung wird im folgenden anhand eines Ausführungsbeispieles näher erläutert, aus dem sich weitere wichtige Merkmale ergeben.

Es zeigt:

Fig. I -schematisch und unmaßstäblich eine Draufsicht auf die wesentlichen Bauelemente einer erfindungsgemäßen Kreisschere;

Fig. 2 -eine Ansicht in Richtung des Pfeiles A von Fig. I zur Erläuterung der Trennung der Ronde vom Abfallstück in der Kreisschere;

Fig. 3 -eine Ansicht entsprechend Fig. 2 zur Erläuterung der Entnahme der Ronde;

Fig. 4 -ebenfalls eine schematische und unmaßstäbliche Stirnansicht zur Erläuterung der Entnahme des Abfallstücks.

An einem nicht näher gezeigten Rahmen ist eine Spannvorrichtung mit symmetrisch zueinander angeordneten Spannarmen I und einem Spannzylinder 2 angeordnet. Die Spannarme haben in der Seitenansicht ein C-Profil. Sie sind bogenförmig und führen die zu bearbeitende Platine beim Trennvorgang. Außerdem ist eine Schere 3 vorgesehen, deren Antrieb bei Pos. 4 angedeutet ist. Mit ihm wird ein bei Pos. 5 angedeutetes Schermesserpaar angetrieben, welches eine Ronde 6, das ist eine Kreisscheibe, aus einer Platine 7 ausschneiden soll. Die Platine hat üblicherweise Rechteckbzw. Quadratform.

Die Platine 7 wird von einer Beschickungsstation A in richtung des Pfeiles A in die Schere eingelegt, wobei Anschläge 8 für die richtige Positionierung der Platine in der Kreisschere dienen. Anschließend wird durch Betätigung der Spannvorrichtung bzw. des Spannzylinders die Platine fixiert. Jetzt schneiden die angetriebenen Schermesser 5 die Ronde 6 aus der Platine 7, wobei die Platine in Richtung des Pfeiles 9 oder in Gegenrichtung dazu um den Drehpunkt bei Pos. 2 gedreht wird.

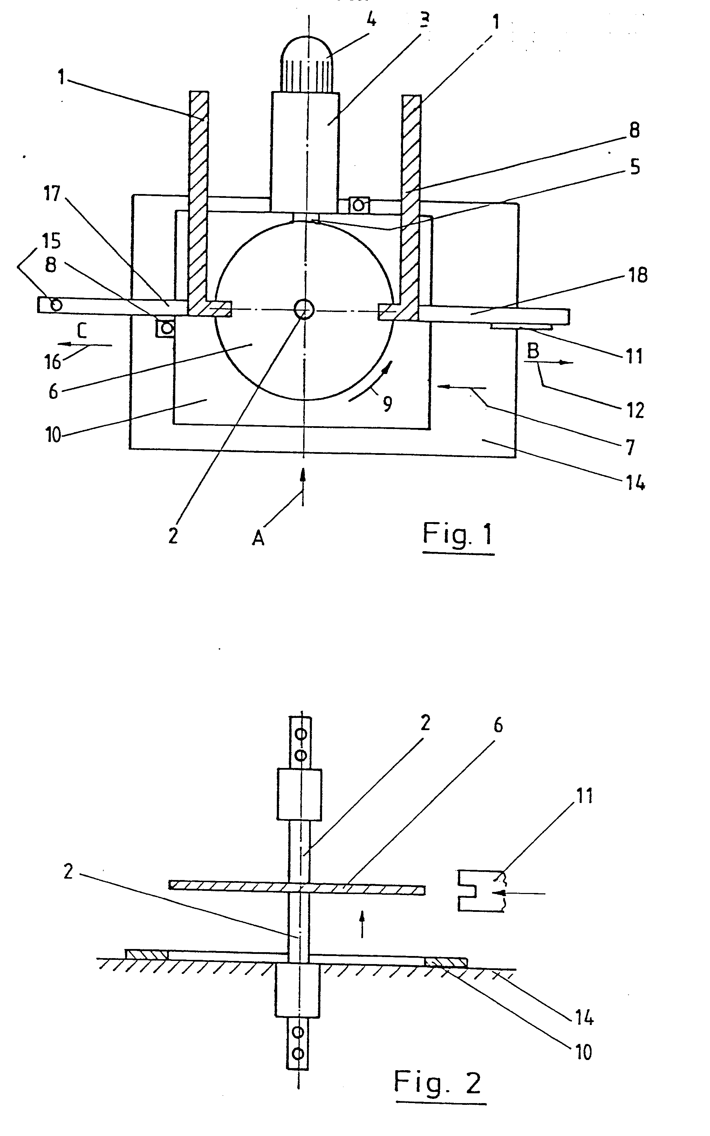

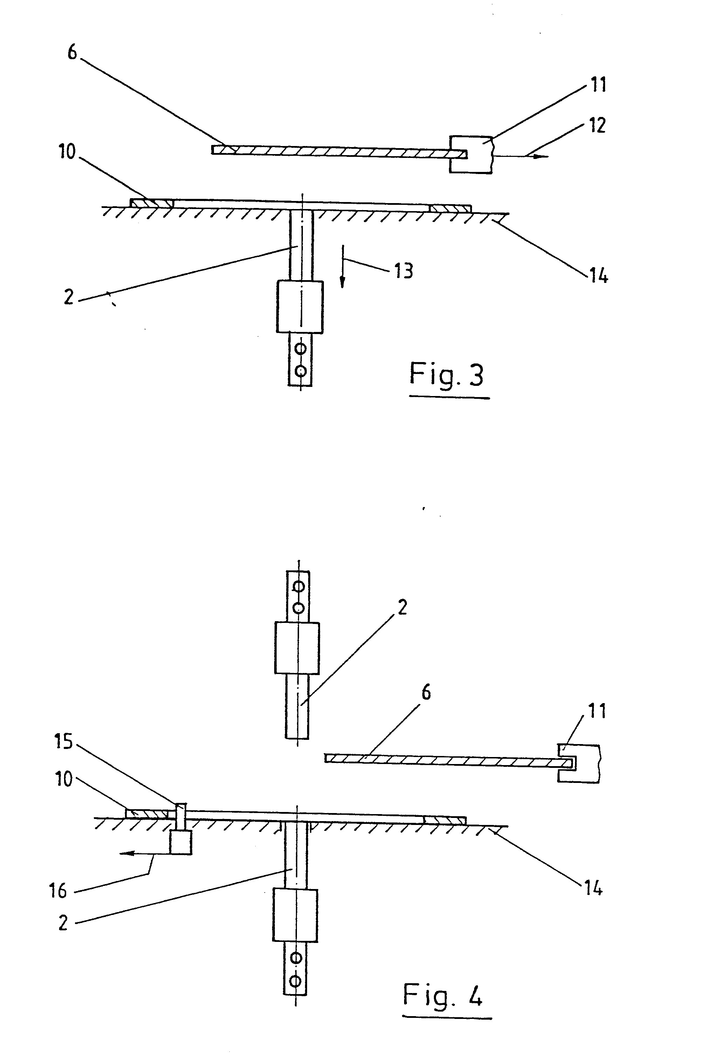

Ist die Ronde 6 fertig ausgeschnitten, so wird sie von dem verbleibenden ringförmigen Abfallstück I0 dadurch getrennt, daß der Spannzylinder 2 um ein entsprechendes Stück angehoben wird. Vergl. Fig. 2.

Fig. 3 zeigt den Abtransport der Ronde 6, die hierzu von einer Zange II gegriffen und in Richtung des Pfeiles I2 zu einer Station B für die Ronden transportiert wird. Jetzt kann der Spannzylinder 2 wieder abgesenkt werden, wie durch den Pfeil I3 in Fig. 3 angedeutet wird. Die Fig. zeigen außerdem, daß während dieses Arbeitsvorganges die Platine bzw. später das ringförmige Abfallstück auf einem horizontalen Arbeitstisch I4 aufliegen.

Fig. 4 zeigt die Entnahme des Abfallstücks I0. Hierzu ist ein heb-und senkbarer Stift I5 vorgesehen, der in Richtung des Pfeiles I6 bzw. in Gegenrichtung dazu längs einer Führung I7 verschiebbar ist. Zum Abtransport legt sich der Stift an die Innenkante des Abfallstücks I0 an und transportiert diesen dadurch in Richtung des Pfeiles I6.

Jetzt kann die Kreisschere in Richtung des Pfeiles A mit einer neuen Platine beschickt werden.

Pos. l8 in Fig. l deutet eine Führung für die Zange ll an. Anstelle der Zange können aber auch andere geeignete Transportmittel verwendet werden, beispielsweise eine Saugerplatte oder eine Magnetplatte, gegebenenfalls auch ein angetriebener Rollengang usw.

Es sei erwähnt, daß die Figuren nicht maßstäblich sind; üblicherweise wird man eine möglichst große Ronde aus der Platine ausschneiden, so daß die Drehachse 2 mit der Mitte der Platine zusammenfällt.

Die Vorteile der Erfindung liegen insbesondere in einer klaren Zuweisung der einzelnen Teilfunktionen der Kreisschere. Es gibt drei Positionen, nämlich die Bedienungs-oder Beschickungsposition A, die Position B zum Abstapeln der Ronden und die Position C zum Abstapeln des Schrotts bzw. der Abfallstücke. Bedingt durch den horizontalen Tisch hat die Kreisschere eine gute Ergonomik. Die Ronde und auch das Abfallstück werden weg von der Bedienungsperson transportiert und brauchen nicht mehr manipuliert zu werden. Es ergeben sich hohe Zeitersparnisse und die Kreisschere kann auch automatisiert werden, wenn man nämlich die Ronden von der Pos. A ausgehend von einem geeigneten mechanischen Manipulator in die Kreisschere einlegen läßt.

Die Anschläge 8 sind heb-und senkbar, um die Drehung der Platine um die Drehachse 2 zu ermöglichen. Auch der Stift l5 ist heb-und senkbar.

## Ansprüche

l. Kreisschere zum Ausschneiden einer Ronde aus einer Platine mit einem Rahmen, an dem eine in einer Seitenansicht C-förmig profilierte, feststehende Spannvorrichtung zum Einspannen der Platine vorgesehen ist, ferner eine Schere mit einem auf Drehung angetriebenen Schermesserpaar und ein horizontaler Arbeitstisch zur Auflage der Platine,

**dadurch gekennzeichnet,**

daß die Schere (3) und die Spannvorrichtung (l) an derselben Seite der Kreisschere vorgesehen sind, daß eine Hubvorrichtung (2) vorgesehen ist, die die Ronde (6) und das Abfallstück (l0) der Platine (7) auf verschiedene Ebenen bringt und daß sich seitlich erstreckende Vorrichtungen (ll,l5) zum Abtransport der Ronde (6) bzw. des Abfallstücks (l0) nach rechts bzw. links seitlich neben die Spannvorrichtung (l) vorgesehen sind.

2. Kreisschere nach Anspruch l,

**dadurch gekennzeichnet,**

daß die Hubvorrichtung an der Spannvorrichtung - (2) ausgebildet ist.

3. Kreisschere nach Anspruch l oder 2,

**dadurch gekennzeichnet,**

daß die Vorrichtung (ll) zum Abtransport der Ronde (6) als hin und her bewegliche Zange, Saugplatte oder Magnetplatte bzw. als angetriebener Rollengang ausgebildet ist.

4. Kreisschere nach einem der Ansprüche l bis 3,

**dadurch gekennzeichnet,**

daß die Vorrichtung (l5) zum Abtransport des Abfallstücks als in Transportrichtung hin und her beweglicher Stift ausgebildet ist.

5. Arbeitsverfahren einer Kreisschere zum Ausschneiden einer Ronde aus einer Platine, wobei man die Platine einer Bearbeitungsstation der Kreisschere mit horizontalem Arbeitstisch zuführt, in der eine Schere aus der Platine die Ronde ausschneidet und dabei ein ringförmiges Abfallstück herstellt, worauf man die Ronde und das Abfallstück voneinander trennt und getrennt abtransportiert,

**dadurch gekennzeichnet,**

daß man die Ronde (6) und das Abfallstück (l0) in der Bearbeitungsstation durch eine lotrechte Bewegung wenigstens eines dieser Teile (6, l0) voneinander trennt und anschließend diese beiden Teile - (6,l0) seitlich in unterschiedlichen Richtungen - (l2,l6) abtransportiert.

0 218 907

Fig. 1

Fig. 2

Fig. 3

Fig. 4